# EUROPÄISCHE PATENTSCHRIFT

(11) **EP 1 584 131 B1**
(45) Veröffentlichungstag und Bekanntmachung des Hinweises auf die Patenterteilung: **02.05.2007**
(21) Anmeldenummer: 03788872.4
(22) Anmeldetag: 10.12.2003
(51) Int. Cl.: H02K 29/08

(54) **ELEKTRISCHER U-BOOT-ANTRIEBSMOTOR MIT HOCHVERFÜGBARER DREHWINKEL- UND DREHZAHLERFASSUNG**
ELECTRIC SUBMARINE DRIVE MOTOR FEATURING READILY AVAILABLE DETECTION OF THE ANGLE OF ROTATION AND ROTATIONAL SPEED
MOTEUR DE COMMANDE ELECTRIQUE D'UN SUBMERSIBLE A DETECTION D'ANGLE DE ROTATION ET DE VITESSE DE ROTATION A HAUTE DISPONIBILITE

(30) Priorität: 15.01.2003 DE 10301271
(43) Veröffentlichungstag der Anmeldung: 12.10.2005
(73) Patentinhaber: SIEMENS AKTIENGESELLSCHAFT, 80333 München (DE)
(72) Erfinder: WENGLER, Peter, 91058 Erlangen (DE); TÖLLE, Hans-Jürgen, 90419 Nürnberg (DE); VOGEL, Reinhard, 91074 Herzogenaurach (DE)
(86) Internationale Anmeldenummer: PCT/DE2003/004066
(87) Internationale Veröffentlichungsnummer: WO 2004/068680

(56) Entgegenhaltungen:
- PATENT ABSTRACTS OF JAPAN vol. 1995, no. 04, 31. Mai 1995 (1995-05-31) & JP 07 031119 A (HARMONIC DRIVE SYST IND CO LTD), 31. Januar 1995 (1995-01-31)
- PATENT ABSTRACTS OF JAPAN vol. 1996, no. 11, 29. November 1996 (1996-11-29) & JP 08 191554 A (KOKUSAN DENKI CO LTD), 23. Juli 1996 (1996-07-23)
- PATENT ABSTRACTS OF JAPAN vol. 018, no. 586 (E-1627), 9. November 1994 (1994-11-09) & JP 06 217511 A (MATSUSHITA ELECTRIC IND CO LTD), 5. August 1994 (1994-08-05)
- PATENT ABSTRACTS OF JAPAN vol. 2003, no. 03, 5. Mai 2003 (2003-05-05) & JP 2002 325395 A (FANUC LTD), 8. November 2002 (2002-11-08)
- PATENT ABSTRACTS OF JAPAN vol. 018, no. 246 (E-1546), 11. Mai 1994 (1994-05-11) & JP 06 030551 A (MATSUSHITA ELECTRIC IND CO LTD), 4. Februar 1994 (1994-02-04)
- PATENT ABSTRACTS OF JAPAN vol. 1995, no. 04, 31. Mai 1995 (1995-05-31) & JP 07 031116 A (MATSUSHITA ELECTRIC IND CO LTD), 31. Januar 1995 (1995-01-31)

## Beschreibung

Die Erfindung bezieht sich auf einen elektrischen U-Boot-Antriebsmotor mit hochverfügbarer Drehwinkel- und Drehzahlerfassung gemäß dem unabhängigen Patentanspruch 1.

An elektrische U-Boot-Antriebsmotoren, insbesondere in Marine-Anwendungen, werden sehr hohe Anforderungen an die Geräuscharmut bei gleichzeitig sehr hohen Anforderungen an die Verfügbarkeit gestellt.

Ein wesentlicher Verursacher von Geräuschen bei U-Boot-Antrieben sind Drehmomentenschwankungen des Antriebsmotors. Solche Drehmomentenschwankungen können durch eine hochgenaue Regelung des Antriebsmotors bzw. eines den Antriebsmotor speisenden Stromrichters mit Hilfe einer Regelungsvorrichtung verringert werden. Der Antriebsmotor weist deshalb einen oder mehrere hochwertige Signalgeber zur Erfassung des Drehwinkels und/oder der Drehzahl des Polrades bzw. Läufers des Antriebsmotors und zur Erzeugung von entsprechenden Signalinformationen für die Regelungsvorrichtung auf. Mit Hilfe dieser Signalinformationen wird eine Strang- bzw. Phasenzuordnung der Wicklungsströme im Ständer des Antriebsmotors, eine feldorientierte, stromrichternahe Regelung des Stromrichters und insbesondere eine geräuschoptimierte Modulation der Motorströme ermöglicht. Weiterhin wird durch eine hochwertige Drehzahlmessung eine Drehzahlregelung des Antriebsmotors auch bei kleinen absoluten Drehzahlen gewährleistet.

Zur Aufrechterhaltung der Einsatzfähigkeit und Manövrierfähigkeit des U-Bootes dürfen auf den Antriebsmotor einwirkende, örtlich begrenzte Störeinflüsse (z.B. EMV-Störungen, Wasser, Feuer oder hohe Temperaturen) zu keinem Ausfall und/oder zu keiner wesentlichen Verschlechterung der Funktion des Antriebsmotors, und hierbei insbesondere der Regelbarkeit des Antriebsmotors, führen. Entsprechend müssen die für die Regelung des Antriebsmotors benötigten Drehwinkel- und Drehzahlinformationen auch unter Störeinwirkung mit hoher Verfügbarkeit vorliegen.

Zur Erfüllung dieser Anforderung ist es bekannt, im Sinne einer Redundanz mehrere gleichartige oder auch verschiedenartige Signalgeber an einem gleichen Einbauort anzuordnen.

Gemäß Aufgabe vorliegender Erfindung soll ein elektrischer U-Boot-Antriebsmotor mit einer hochverfügbaren Drehwinkel- und Drehzahlerfasung trotz örtlich begrenzter äusserer Störeinflüsse geschaffen werden.

Die Lösung dieser Aufgabe ist erfindungsgemäß durch einen U-Boot-Antriebsmotor gemäß Anspruch 1 möglich. Vorteilhafte Ausgestaltungen der Erfindung sind jeweils Gegenstand der Unteransprüche.

Durch die erfindungsgemäß vorgesehene örtlich unterschiedliche Anordnung von zumindest zweien der Signalgeber bleibt zumindest einer der Signalgeber ausserhalb der Einwirkung der auf den Antriebsmotor einwirkenden, örtlich begrenzten äußeren Störeinflüsse und es ist sichergestellt, dass in der Regelungsvorrichtung auch im Fall solcher Störeinflüsse Drehwinkel- und/oder Drehzahlinformationen verfügbar sind und somit die Regelung des Antriebsmotors und damit die Manövrierbarkeit des U-Bootes aufrechterhalten werden kann.

Zur weiteren Erhöhung der Verfügbarkeit der Drehwinkel- und Drehzahlinformationen, inbesondere für eine hochgenaue Regelung des Antriebsmotors, weist der Antriebsmotor vorteihafterweise zumindest einen weiteren dritten Signalgeber auf, der örtlich unterschiedlich zu dem ersten Signalgeber und dem zweiten Signalgeber angeordnet ist, derart dass bei auf den Antriebsmotor einwirkenden, örtlich begrenzten äußeren Störeinflüssen zumindest zwei der Signalgeber funktionsfähig verbleiben.

Die Verfügbarkeit von Drehzahl- und Drehwinkelinformationen bei zusätzlichen systematischen Fehlern und/oder Störungen der Signalgeber kann noch dadurch erhöht werden, dass der erste Signalgeber und der zweite Signalgeber und der dritte Signalgeber zueinander unterschiedliche Wirkprinzipien und/oder unterschiedliche Signalformen und -inhalte aufweisen. Somit ist sichergestellt, dass bei einem systematischer Fehler und/oder einer Störung eines der beiden funktionsfähig verbleibenden Signalgeber der andere der beiden Signalgeber weiterhin korrekte Drehwinkel- und/oder Drehzahlinformationen erzeugt.

In einer alternativen vorteilhaften Ausgestaltung der Erfindung weist der Antriebsmotor zumindest einen weiteren dritten Signalgeber auf, der in örtlicher Nähe zu dem ersten Signalgeber oder dem zweiten Signalgeber angeordnet ist und ein zu dem in örtlicher Nähe angeordneten Signalgeber unterschiedliches Wirkprinzip und/oder unterschiedliche Signalformen und - inhalte aufweist, derart dass bei auf den Antriebsmotor einwirkenden, örtlich begrenzten äußeren Störeinflüssen zumindest zwei der drei Signalgeber funktionsfähig verbleiben.

In einer besonders vorteilhaften Ausführungsform der Erfindung ist eine hochgenaue Regelung des Antriebsmotors mit Hilfe der Signalinformationen von maximal zwei der funktionsfähig verbleibenden Signalgeber vorgesehen. Hierdurch kann eine hohe Verfügbarkeit der für die hochgenaue Regelung des Antriebsmotors benötigten Signalinformationen mit einer entsprechend geringen Anzahl von Signalgebern und entsprechend geringem technischen und finanziellem Aufwand erreicht werden.

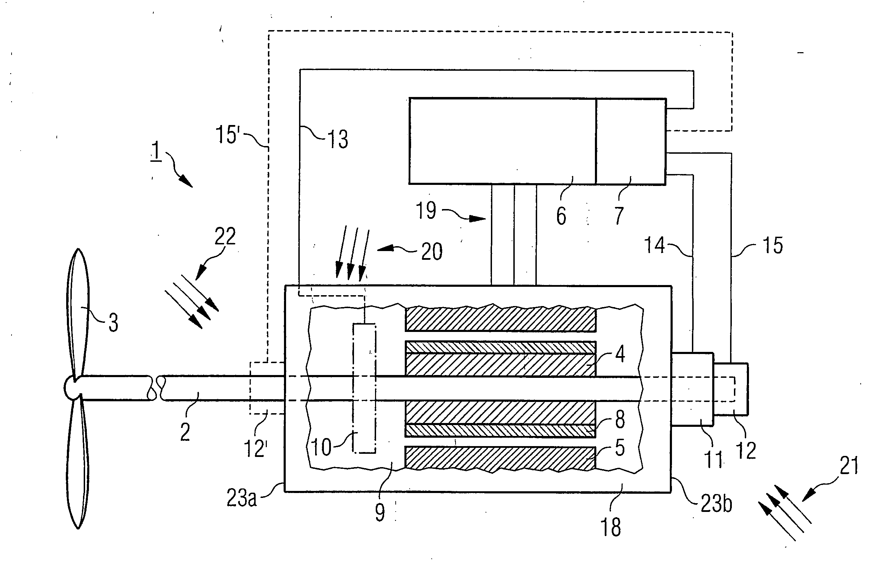

Die Erfindung sowie weitere vorteilhafte Ausgestaltungen der Erfindung gemäß Merkmalen der Unteranspruche werden im Folgenden anhand eines Ausführungsbeispieles in der Figur näher erläutert.

Die Figur zeigt in vereinfachter Darstellung und im Teilschnitt einen als polradseitig permanentmagnetisch erregte Synchronmaschine ausgebildeten elektrischer U-Boot-Antriebsmotor 1 mit einer Motorwelle 2, die, ggfs. über eine nicht dargestellte Kupplung, einen Propeller 3 zum Antrieb eines U-Bootes antreibt. Der Antriebsmotor 1 weist einen Ständer 5 und ein von Permanentmagneten 8 erregtes und mit der Motorwelle 2 verbundenes Polrad 4 auf. Ein Gehäuse 18 umschliesst den Ständer 5, das Polrad 4 und Teile der Motorwelle 2. Die Motorwelle 2 ist hierbei in nicht näher dargestellter Weise in den Stirnflächen 23a,23b des Gehäuses 18 drehbar gelagert.

Der Antriebsmotor 1 wird über Stromzuführungsleitungen 19 von einem Stromrichter 6 gespeist, wobei die Regelung des Stromrichters 6 durch eine Regelungsvorrichtung 7 erfolgt. Der Stromrichter 6 und die Regelungsvorrichtung 7 sind ausserhalb des Gehäuses 18 des Antriebsmotors 1 angeordnet. Alternativ ist auch eine Anordnung des Stromrichters 6 und der Regelungsvorrichtung 7 innerhalb des Gehäuses 18 des Antriebsmotors 1 möglich.

Der Antriebsmotor 1 weist Signalgeber 10,11 zur Bestimmung des Drehwinkels und/oder der Drehzahl des Polrades 4 und zur Erzeugung entsprechender Signalinformationen für die Regelungsvorrichtung 7 auf. Die Signalgeber 10, 11 sind hierzu über elektrische Verbindungsleitungen 13, 14 mit der Regelungsvorrichtung 7 verbunden und speisen über diese Leitungen die Regelungsvorrichtung 7 mit den Signalinformationen und werden -soweit erforderlich- über diese Verbindungsleitungen von der Regelungsvorrichtung 7 mit elektrischer Energie versorgt.

Der Signalgeber 10 und der Signalgeber 11 sind örtlich derart unterschiedlich angeordnet, dass bei auf den Antriebsmotor 1 einwirkenden, örtlich begrenzten äusseren Störeinflüssen zumindest einer der beiden Signalgeber 10,11 funktionsfähig verbleibt. Der Signalgeber 10 befindet sich hierzu in einem vom Gehäuse 18 umschlossenen Innenraum 9 des Antriebsmotors 1, während der Signalgeber 11 im nicht abtriebsseitigen Bereich des Motors 1, d.h. im Bereich der Stirnfläche 23b des Antriebsmotors 1 angeordnet ist. Im Fall auf den Antriebsmotor 1 im Bereich des Signalgebers 11 einwirkender, örtlich begrenzter Störeinflüsse 21 verbleibt somit der Signalgeber 10 funktionsfähig. Umgekehrt verbleibt im Fall auf den Signalgeber 10 einwirkender, örtlich begrenzter Störeinflüsse 20 der Signalgeber 11 funktionsbereit. Somit sind auch unter dem Einfluss von Störeinwirkungen 20 oder 21 Drehzahl- und/oder Drehwinkelinformationen verfügbar und die Regelbarkeit des Antriebsmotors 1 und damit die Manövrierbarkeit des U-Bootes können aufrechterhalten werden.

Zur weiteren Erhöhung der Verfügbarkeit von Drehzahl- und/oder Drehwinkelinformationen, insbesondere für eine hochgenaue Regelung des Antriebsmotors 1, weist der Antriebsmotor 1 in einer ersten alternativen Ausgestaltung einen weiteren dritten Signalgeber 12' auf, der örtlich unterschiedlich zu dem Signalgeber 10 und dem Signalgeber 11 angeordnet ist, derart, dass bei auf den Antriebsmotor 1 einwirkenden, örtlich begrenzten äußeren Störeinflüssen 20 oder 21 oder 22 zumindest zwei der Signalgeber 10,11,12' funktionsfähig verbleiben. Der Signalgeber 12' ist hierzu im abtriebsseitigen Bereich des Motors 1, d.h. im Bereich der Stirnfläche 23a des Motors 1 angeordnet und speist über eine Verbindungsleitung 15' die Regelungsvorrichtung 7 mit Drehzahl und/oder Drehwinkelinformationen und wird - soweit erforderlich - über diese Verbindungsleitung mit elektrischer Energie versorgt.

Im Fall auf den Antriebsmotor 1 einwirkender, örtlich begrenzter Störeinflüsse 20, die zu einem Ausfall des Signalgebers 10 führen, bleiben somit die Signalgeber 11 und 12' weiterhin funktionsfähig. Im Fall auf den Antriebmotor einwirkender, örtlich begrenzter Störeinflüsse 21, die zu einem Ausfall des Signalgebers 11 führen, bleiben somit die Signalgeber 10 und 12' weiterhin funktionsfähig. Im Fall auf den Antriebsmotor 1 einwirkender, örtlich begrenzter Störeinflüsse 22, die zu einem Ausfall des Signalgebers 12' führen, bleiben somit die Signalgeber 10 und 11 weiterhin funktionsfähig.

Zur weiteren Erhöhung der Verfügbarkeit weisen die Signalgeber 10,11,12' zueinander unterschiedliche Wirkprinzipen und/oder unterschiedliche Signalformen und -inhalte auf. Somit ist sichergestellt, dass z.B. bei einem systematischer Fehler und/oder einer Störung eines der beiden funktionsfähig verbleibenden Signalgeber der andere der beiden Signalgeber weiterhin korrekte Drehwinkel- und/oder Drehzahlinformationen erzeugt.

Gemäß einer zweiten alternativen Ausgestaltung der Erfindung weist der Antriebsmotor 1 statt des örtlich unterschiedlich zu dem Signalgeber 10 und dem Signalgeber 11 angeordneten Signalgebers 12' einen weiteren dritten Signalgeber 12 auf, der in örtlicher Nähe zu dem Signalgeber 11 angeordnet ist. Der Signalgeber 12 weist hierbei ein zu dem Signalgeber 11 unterschiedliches Wirkprinzip und/oder unterschiedliche Signalformen und -inhalte auf, derart dass, wie im Folgenden erläutert, bei auf den Antriebsmotor 1 einwirkenden, örtlich begrenzten äußeren Störeinflüssen zumindest zwei der drei Signalgeber funktionsfähig verbleiben.

Im Fall auf die Signalgeber 11 und 12 einwirkender, örtlich begrenzter Störeinflüsse 21 weist der Signalgeber 12 aufgrund seines zu dem Signalgeber 11 unterschiedlichen Wirkprinzips und/oder seiner unterschiedlichen Signalform und -inhalt eine entsprechend höhere Störfestigkeit auf, so dass neben dem örtlich unterschiedlich angeordneten Signalgeber 10 auch der Signalgeber 12 mit höherer Störfestigkeit funktionsfähig verbleibt.

Im Fall auf den Signalgeber 10 einwirkender, örtlich begrenzter Störeinflüsse 20 verbleiben aufgrund ihrer örtlich unterschiedlichen Anordnung die Signalgeber 11 und 12 funktionsfähig. In diesem Fall ist aufgrund der unterschiedlichen Wirkprinzipien und/oder der unterschiedlichen Signalformen und - inhalte der Signalgeber 11 und 12 die Verfügbarkeit von korrekten Drehzahl- und/oder Drehwinkelinformationen auch bei systematischen Störungen und/oder Fehlern eines der beiden Signalgeber 11 oder 12 gewährleistet.

Die weiteren Ausführungen beschränken sich auf die vorstehend erläuterte zweite alternative Ausgestaltung des Antriebsmotors 1 mit den zwei in örtlicher Nähe zueinander angeordneten Signalgebern 11 und 12. Die Ausführungen gelten sinngemäß für die erste alternative Ausgestaltung des Antriebsmotors 1 mit den drei zueinander örtlich unterschiedlich angeordneten Signalgebern 10,11,12'.

Für eine höchstmögliche Verfügbarkeit des Antriebsmotors 1 bei äußeren Störeinflüssen ist der Signalgeber 10 vorteilhafterweise mit einer erhöhten, den maximalen äußeren Störeinflüssen entsprechenden Festigkeit ausgestattet. Ein guter Schutz des Signalgebers 10 vor äußeren Störeinflüssen wird auf einfache Weise dadurch erzielt, dass der Signalgeber 10, wie im Ausführungsbeispiel dargestellt, in dem vom Gehäuse 18 des Antriebmotors 1 schützend umschlossenen Innenraum 9 angeordnet ist. Eine weitere Vergrößerung der Störfestigkeit des Signalgebers 10 kann unter anderem durch einen konstruktiv einfachen Aufbau und die Verwendung eines einfachen Messverfahrens erzielt werden.

Der Signalgeber 10 ist damit der am besten gegen äußere Einflüsse geschützte Signalgeber des Motors 1. Er wird deshalb vorteilhafterweise zur Erfassung eines Absolutwertes des Drehwinkels des Polrades 4 verwendet. Mit Hilfe dieses Absolutwertes können in der Regelungsvorrichtung 7 die für die Antriebsregelung benötigten Phasenlagen und Vorzeichen der Strangströme im Ständer 5 bestimmt und mit Hilfe dieser Informationen die Regelbarkeit des Antriebsmotors 1 und damit die Manövrierbarkeit des U-Bootes auch bei schwerwiegenden äußeren Störeinflüssen und Ausfall der Signalgeber 11 und 12 aufrechterhalten werden.

Eine besonders robuste und insbesondere gegen mechanische und thermische Störeinflüsse unempfindliche Messung des Absolutwertes des Drehwinkels des Polrades 4, wie sie z.B. im Innenraum 9 des Antriebsmotors 1 erforderlich ist, ist dadurch möglich, daß der Signalgeber 10 als magnetischer Positionssensor ausgebildet ist.

Die für die Magnetfeldmessung benötigten magnet-sensitiven Elemente des Signalgebers 10 müssen hierbei gegenüber den elektrischen und magnetischen Feldern innerhalb des Antriebsmotors 1 abgeschirmt sein. Im Fall des mittels Permanentmagneten 8 erregten Polrades 4 des Ausführungsbeispiels ist zur Bestimmung des Absolutwertes des Drehwinkels des Polrades 4 auch eine direkte Messung der von den Permanentmagneten 8 erzeugten Magnetfelder möglich.

Im Fall einer Anordnung des Stromrichters 6 innerhalb des Gehäuses 18 des Antriebsmotors 1 kann die Verbindungsleitung 13 innerhalb des Gehäuses 18 zu dem Stromrichter 6 geführt und dadurch die Signalinformationen vor äußeren, auf den Antriebsmotor 1 einwirkenden Störeinflüssen geschützt werden

Für eine besonders hochgenaue Regelung und eine daraus resultierend besonders geringe Geräuschentwicklung des Antriebsmotors 1 weist zumindest einer der Signalgeber, im Fall des Ausführungsbeispiels der Signalgeber 11, eine erhöhte, den Anforderungen einer hochgenauen Regelung des Antriebsmotors 1 entsprechende Auflösung des Drehwinkels des Polrades 4 auf.

Eine hohe Auflösung des Drehwinkels ist insbesondere durch eine Ausbildung des Signalgebers 11 als magnetischer oder optischer Inkrementalgeber möglich. Inkrementalgeber der vorgenannten Art erzeugen sinus- oder rechteckförmige elektrische Signale, deren Aufeinanderfolge in der Regelvorrichtung 7 auswertbar und dadurch die Drehzahl und ein Relativwert für den Drehwinkel des Polrades 4 bestimmbar ist. Zusätzlich erzeugen diese Inkrementalgeber mindestens einen Nullimpuls je mechanischer Umdrehung, die eine weitergehende Bestimmung des Absolutwertes des Drehwinkels aus dessen Relativwert ermöglichen. Zur Verbesserung der Winkelauflösung kann die Regelungsvorrichtung 7 noch eine geeignete Interpolationselektronik aufweisen.

Für eine zusätzliche Bestimmung der Drehrichtung des Polrades 4 weist der Signalgeber 11 vorteilhafterweise mindestens zwei Signalspuren mit vorzugsweise konstantem Phasenversatz zueinander auf.

Um eine präzise Messung des Drehwinkels bei gleichzeitig einfacher Montage und Zugänglichkeit zu ermöglichen, ist der Signalgeber 11 mit erhöhter Auflösung des Drehwinkels, wie im Ausführungsbeispiel in der Figur dargestellt, vorteilhafterweise am nicht abtriebsseitigen Ende des Antriebsmotors 1 an der Motorwelle 2,d.h. im Bereich der Stirnfläche 23b angeordnet. Die Befestigung des feststehenden Signalgeberteils kann z.B. direkt oder über geeignete Flansche an der Stirnfläche 23b des Gehäuses 18 erfolgen.

In Fall einer Anordnung des Stromrichters 6 und der Regelungsvorrichtung 7 innerhalb des Gehäuses 18 des Antriebsmotors 1 kann die Einwirkung äußerer Störeinflüsse dadurch verringert werden, dass der Weg der Kabelverbindung 14 weitgehend vollständig im Inneren des Gehäuses 18 des Antriebsmotors 1 verläuft.

Vorteilhafterweise erzeugt zumindest einer der Signalgeber, im Fall des Ausführungsbeispiels der Signalgeber 12, ein analoges Ausgangsignal und weist dadurch im Vergleich zu den Signalgebern 10 und 11 insbesondere ein geringere Empfindlichkeit gegen elektromagnetische Störungen auf. Aufgrund ihrer Robustheit und Messgenauigkeit eignen sich als Signalgeber 12 besonders Tachometergeneratoren oder 2-oder 3-phasige Drehmelder (z.B. Resolver). Je nach Art des verwendeten Messsystems stehen die Drehzahl (z.B. bürstenloser Tacho mit internem Gleichrichter), Drehzahl und Drehrichtung (z.B. Tacho mit Kommutator und Bürsten) oder Drehwinkel (z.B. Resolver) als direkte Informationen zur Verfügung und ermöglichen somit eine hochgenaue Regelung des Antriebsmotors 1.

Vorzugsweise ist der Signalgeber 12 als Tachogenerator mit permanentmagnetischer Erregung ausgebildet, da ein solcher Signalgeber keine Versorgungsspannung benötigt und damit eine hohe Verfügbarkeit erreicht wird.

Der Signalgeber 12 mit analogem Ausgangssignal ist, wie im Ausführungsbeispiel dargestellt, für eine einfache Montage und Wartungszugänglichkeit ähnlich wie der Signalgeber 11 an der Motorwelle 2 am nicht abtriebsseitigen Ende des Antriebsmotors 1 im Bereich der Stirnfläche 23b angeordnet.

Bei Ausbildung des Signalgebers 10 als magnetischem Positionssensor, des Signalgebers 11 als Inkrementalgeber mit mindestens zwei Impulsspuren mit konstantem Phasenversatz und des Signalgebers 12 als Tachogenerator lassen sich vorteilhafterweise, wie im folgenden beschrieben, durch elektronische Umformung und Verarbeitung der Signalinformationen der Signalgeber 10, 11 und 12 in der Regelungsvorrichtung 7 durch Kombination der Signale von maximal zwei der drei Signalgeber 10,11,12 alle für eine hochgenaue Regelung des Antriebsmotors 1 benötigten Informationen über den Drehwinkel und die Drehzahl des Polrades 4 gewinnen und somit eine hochverfügbare und hochgenaue Regelung des Antriebsmotors 1 mit einer nur geringen Anzahl von Signalgebern und entsprechend geringem technischem und finanziellem Aufwand erzielen.

Der als magnetischer Positionssensor ausgebildete Signalgeber 10 ermöglicht zum einen auf direktem Weg eine Bestimmung des absoluten Wertes des Drehwinkels des Polrades 4. Zum anderen ist durch digitale elektronische Interpolation aus der Signalinformation selbst und/oder mit Hilfe der Drehzahlinformationen der Signalgeber 11 und/oder 12 eine hoch aufgelöste Bestimmung des Drehwinkels sowie über digitale elektronische Drehzahlberechnung aus der Veränderung der Signalinformation des Signalgebers 10 selbst und/oder mit Hilfe der Drehzahlinformationen der Signalgeber 11 und/oder 12 eine Drehrichtungsinformation und hochauflösende und genaue Drehzahlinformation gewinnbar. Eine hochgenaue Regelung des Antriebsmotors 1 ist somit alleine durch Funktionsfähigkeit des Signalgebers 10 möglich.

Der als Inkrementalgeber mit mindestens zwei Impulsspuren mit vorzugsweise konstantem Phasenversatz ausgebildete Signalgeber 11 erlaubt eine direkte Gewinnung einer hochaufgelösten und -genauen Drehzahlinformation durch elektronische Auswertung der zeitlichen Abfolge der impulsförmigen Ausgangssignale des Inkrementalgebers und eine Bestimmung der Drehrichtung des Polrades 4 durch Auswertung der Signale der mindestens zwei Impulsspuren. Der absolute Wert des Drehwinkels des Polrades 4 kann durch elektronische Integration der frequenzproportionalen Signale der mindestens zwei Impulsspuren und unter Verwendung eines Nullimpulses des Inkrementalgebers gewonnen werden. Eine hochgenaue Regelung des Antriebsmotors 1 ist somit alleine durch Funktionsfähigkeit des Signalgebers 11 möglich.

Im Unterschied zu den Signalgebern 10 und 11 erlaubt ein als Tachogenerator ausgebildeter Signalgeber 12 für sich alleine zwar eine direkte Messung und Bestimmung der Drehrichtung und Drehzahl des Polrades 4, aber der absolute Wert des Drehwinkels ist nur über elektronische Integration des Drehzahlsignals und unter Zuhilfenahme von winkelsynchronen Referenzsignalen möglich. Solche Signale sind z.B. die Nullimpulse des Signalgebers 11 und/oder die Drehwinkelinformation von Signalgeber 10. Für eine Regelung des Antriebsmotors 1 ist somit ein funktionsfähiger Signalgeber 12 allein nicht ausreichend, sondern noch ein weiterer funktionsfähiger Signalgeber 10 oder 11 notwendig.

## Patentansprüche

1. Elektrischer U-Boot-Antriebsmotor (1) mit hochverfügbarer Drehwinkel- und Drehzahlerfassung, mit einem Polrad (4) und mit zumindest zwei Signalgebern (10,11) zur Erfassung des Drehwinkels und/oder der Drehzahl des Polrades (4) und zur Erzeugung von entsprechenden Signalinformationen für eine Regelungsvorrichtung (7) des Antriebsmotors (1),
**dadurch gekennzeichnet, dass**
zumindest ein erster der Signalgeber (10) zu einem zweiten der Signalgeber (11) örtlich derart unterschiedlich angeordnet ist, dass bei auf den Antriebsmotor (1) einwirkenden, örtlich begrenzten äußeren Störeinflüssen (20 oder 21) zumindest einer der beiden Signalgeber (10,11) funktionsfähig verbleibt, wozu der erste der Signalgeber (10) im abtriebsseitgen Bereich des Motors (1) und der zweite der Signalgeber (11) im nicht abtriebsseitigen Bereich des Motors (1) angeordnet ist.

2. Elektrischer U-Boot-Antriebsmotor (1) nach Anspruch 1 mit zumindest einem weiteren dritten Signalgeber (12'), der örtlich unterschiedlich zu dem ersten Signalgeber (10) und dem zweiten Signalgeber (11) angeordnet ist, derart dass bei auf den Antriebsmotor (1) einwirkenden, örtlich begrenzten äußeren Störeinflüssen (20 oder 21 oder 22) zumindest zwei der Signalgeber (10,11,12') funktionsfähig verbleiben.

3. Elektrischer U-Boot-Antriebsmotor (1) nach Anspruch 2, wobei der erste Signalgeber (10) und der zweite Signalgeber (11) und der dritte Signalgeber (12') zueinander unterschiedliche Wirkprinzipien und/oder unterschiedliche Signalformen und -inhalte aufweisen.

4. Elektrischer U-Boot-Antriebsmotor (1) nach Anspruch 1, mit zumindest einem weiteren dritten Signalgeber (12), der in örtlicher Nähe zu dem ersten Signalgeber (10) oder dem zweiten Signalgeber (11) angeordnet ist und die erhöhte Verfügbarkeit der Drehwinkel- und Drehzahlinformationen dadurch erreicht wird, dass die Signalgeber (10,11,12) unterschiedliches Wirkprinzipien und/oder unterschiedliche Signalformen und -inhalte aufweisen, derart dass bei auf den Antriebsmotor (1) einwirkenden, örtlich begrenzten äußeren Störeinflüssen (20 oder 21 oder 22) zumindest zwei der drei Signalgeber (10,11,12) funktionsfähig verbleiben.

5. Elektrischer U-Boot-Antriebsmotor (1) nach zumindest einem der Ansprüche 2 bis 4,
mit einer hochgenauen Regelung des Antriebsmotors (1) mit Hilfe von Signalinformationen von maximal zwei der funktionsfähig verbleibenden Signalgeber (10,11,12 bzw.12').

6. Elektrischer U-Boot-Antriebsmotor (1) nach zumindest einem der vorhergehenden Ansprüche
mit einer erhöhten, den maximalen äußeren Störeinflüssen (21) entsprechenden Festigkeit für zumindest einen der Signalgeber (10).

7. Elektrischer U-Boot-Antriebsmotor (1) nach Anspruch 6,
wobei der Signalgeber (10) mit erhöhter Festigkeit Mittel zur Erfassung eines Absolutwertes des Drehwinkels aufweist.

8. Elektrischer U-Boot-Antriebsmotor (1) nach mindestens einem der Ansprüche 6 und 7,
wobei der Signalgeber (10) mit erhöhter Festigkeit als magnetischer Positionssensor ausgebildet ist.

9. Elektrischer U-Boot-Antriebsmotor (1) nach Anspruch 6
mit einer Anordnung des Signalgebers (10) mit erhöhter Festigkeit in einem von einem Gehäuse (18) des Antriebsmotors (1) umschlossenen Raum (9).

10. Elektrischer U-Boot-Antriebsmotor (1) nach zumindest einem der Ansprüche 1 bis 9
mit einer erhöhten, den Anforderungen einer hochgenauen Regelung des Antriebsmotors (1) entsprechenden Auflösung des Drehwinkels des Polrades (4) bei zumindest einem der Signalgeber (10,11,12 bzw.12').

11. Elektrischer U-Boot-Antriebsmotor (1) nach Anspruch 10,
wobei der zumindest eine Signalgeber (10,11,12 bzw.12') mit erhöhter Auflösung des Drehwinkels als magnetischer oder optischer Inkrementalgeber ausgebildet ist.

12. Elektrischer U-Boot-Antriebsmotor (1) nach zumindest einem der Ansprüche 1 bis 9,
wobei zumindest einer der Signalgeber (10,11,12 bzw.12') ein analoges Ausgangssignal erzeugt.

13. Elektrischer U-Boot-Antriebsmotor (1) nach Anspruch 12,
wobei mindestens einer der Signalgeber (10,11,12 bzw.12') mit analogem Ausgangssignal als Tachogenerator oder als 2- oder 3-phasiger Resolver ausgebildet ist.

14. Elektrischer U-Boot-Antriebsmotor (1) nach mindestens einem der Ansprüche 1 bis 13, wobei mindestens einer der Signalgeber (11,12) mit erhöhter Auflösung des Drehwinkels und/oder mit analogem Ausgangssignal im nicht abtriebsseitigen Bereich des Motors (1) im Bereich der Stirnfläche (23b) angeordnet ist.

15. Elektrischer U-Boot-Antriebsmotor (1) nach einem der vorherhegenden Ansprüche
mit einer Ausbildung des Antriebsmotors (1) als Synchronmaschine mit pemanentmagnetisch erregtem Polrad (4).

## Claims

1. Electric submarine propulsion motor (1) with high-availability rotation angle and rotation speed recording, having a rotor (4) and having at least two signal transmitters (10, 11) for recording the rotation angle and/or the rotation speed of the rotor (4), and for production of appropriate signal information for a control apparatus (7) for the propulsion motor (1),
**characterized in that**
at least a first of the signal transmitters (10) is arranged spatially differently from a second of the signal transmitters (11), in such a manner that, when external disturbance influences (20 or 21) which are locally limited and act on the propulsion motor (1) occur, at least one of the two signal transmitters (10, 11) remains operable, for which purpose the first of the signal transmitters (10) is arranged in the output-drive side area of the motor (1), and the second of the signal transmitters (11) is arranged away from the output-drive side area of the motor (1).

2. Electric submarine propulsion motor (1) according to Claim 1, having at least one further third signal transmitter (12'), which is arranged spatially differently from the first signal transmitter (10) and the second signal transmitter (11), in such a manner that, when external disturbance influences (20, 21 or 22) which are locally limited and act on the propulsion motor (1) occur, at least two of the signal transmitters (10, 11, 12') remain operable.

3. Electric submarine propulsion motor (1) according to Claim 2, with the first signal transmitter (10), the second signal transmitter (11) and the third signal transmitter (12') having mutually different principles of operation and/or different signal forms and contents.

4. Electric submarine propulsion motor (1) according to Claim 1, having at least one further third signal transmitter (12), which is arranged in the physical vicinity of the first signal transmitter (10) or the second signal transmitter (11), and the increased availability of the rotation angle and rotation speed information is obtained in that the signal transmitters (10, 11, 12) have different principles of operation and/or different signal forms and contents, in such a manner that, when external disturbance influences (20, 21 or 22) which are locally limited and act on the propulsion motor (1) occur, at least two of the three signal transmitters (10, 11, 12) remain operable.

5. Electric submarine propulsion motor (1) according to at least one of Claims 2 to 4,
having high-precision control of the propulsion motor (1) with the aid of signal information from a maximum of two of the signal transmitters (10, 11, 12 or 12') which remain operable.

6. Electric submarine propulsion motor (1) according to at least one of the preceding claims,
having increased strength, which corresponds to the maximum external disturbance influences (21), for at least one of the signal transmitters (10).

7. Electric submarine propulsion motor (1) according to Claim 6,
with the signal transmitter (10) with increased strength having means for recording of an absolute value of the rotation angle.

8. Electric submarine propulsion motor (1) according to at least one of Claims 6 and 7,
with the signal transmitter (10) with increased strength being a magnetic position sensor.

9. Electric submarine propulsion motor (1) according to Claim 6,
with the signal transmitter (10) with increased strength being arranged in an area (9) which is surrounded by a housing (18) of the propulsion motor (1).

10. Electric submarine propulsion motor (1) according to at least one of Claims 1 to 9,
with increased resolution, which complies with the requirement for high-precision control of the propulsion motor (1), of the rotation angle of the rotor (4) from at least one of the signal transmitters (10, 11, 12 or 12').

11. Electric submarine propulsion motor (1) according to Claim 10, with the at least one signal transmitter (10, 11, 12 or 12') with increased resolution of the rotation angle being a magnetic or optical incremental transmitter.

12. Electric submarine propulsion motor (1) according to at least one of Claims 1 to 9,
with at least one of the signal transmitters (10, 11, 12 or 12') producing an analogue output signal.

13. Electric submarine propulsion motor (1) according to Claim 12,
with at least one of the signal transmitters (10, 11, 12 or 12') with an analogue output signal being a tachogenerator or a 2-phase or 3-phase resolver.

14. Electric submarine propulsion motor (1) according to at least one of Claims 1 to 13, with at least one of the signal transmitters (11, 12) with increased resolution of the rotation angle and/or with an analogue output signal being arranged away from the output-drive side area of the motor (1), in the area of the end surface (23b).

15. Electric submarine propulsion motor (1) according to one of the preceding claims,
with the drive motor (1) being a synchronous machine with a permanent-magnet rotor (4).

## Revendications

1. Moteur électrique de propulsion de submersible (1) avec détection à haute disponibilité d'angle de rotation et de vitesse de rotation, ayant une roue polaire (4) et ayant au moins deux transmetteurs de signal (10, 11) pour l'acquisition de l'angle de rotation et/ou de la vitesse de rotation de la roue polaire (4) et pour la production d'informations de signalisation correspondantes destinées à un dispositif de régulation (7) du moteur de propulsion (1),
**caractérisé par le fait qu'**au moins un premier transmetteur de signal (10) est placé en un lieu différent de celui d'un deuxième transmetteur de signal (11) de telle sorte qu'au moins l'un des deux transmetteurs de signal (10, 11) reste capable de fonctionner en présence d'influences parasites extérieures (20 ou 21) limitées localement mais agissant sur le moteur de propulsion (1), le premier transmetteur de signal (10) étant placé à cet effet dans la zone du moteur (1) qui est située côté sortie et le deuxième transmetteur de signal (11) dans la zone du moteur (1) qui n'est pas située côté sortie.

2. Moteur électrique de propulsion de submersible (1) selon la revendication 1, ayant au moins un troisième transmetteur de signal (12') qui est placé en un lieu différent de ceux du premier transmetteur de signal (10) et du deuxième transmetteur de signal (11) de telle sorte qu'au moins deux transmetteurs de signal (10, 11, 12') restent capables de fonctionner en présence d'influences parasites extérieures (20 ou 21 ou 22) limitées localement mais agissant sur le moteur de propulsion (1).

3. Moteur électrique de propulsion de submersible (1) selon la revendication 2, le premier transmetteur de signal (10), le deuxième transmetteur de signal (11) et le troisième transmetteur de signal (12') ayant des principes d'action différents les uns des autres et/ou des formes et contenus de signal différents les uns des autres.

4. Moteur électrique de propulsion de submersible (1) selon la revendication 1, ayant au moins un troisième transmetteur de signal (12) qui est placé à proximité du premier transmetteur de signal (10) ou du deuxième transmetteur de signal (11), la disponibilité accrue des informations d'angle de rotation et de vitesse de rotation étant obtenue par le fait que les transmetteurs de signal (10, 11, 12) ont des principes d'action différents et/ou des formes et contenus de signal différents de telle sorte qu'au moins deux des trois transmetteurs de signal (10, 11, 12) restent capables de fonctionner en présence d'influences parasites extérieures (20 ou 21 ou 22) limitées localement mais agissant sur le moteur de propulsion (1).

5. Moteur électrique de propulsion de submersible (1) selon au moins l'une des revendications 2 à 4, ayant une régulation de haute précision du moteur de propulsion (1) à l'aide d'informations de signalisation en provenance au maximum de deux des transmetteurs de signal (10, 11, 12 ou 12') restant capables de fonctionner.

6. Moteur électrique de propulsion de submersible (1) selon au moins l'une des revendications précédentes, ayant une fiabilité accrue, correspondant aux influences parasites extérieures maximales (21), pour au moins l'un des transmetteurs de signal (10).

7. Moteur électrique de propulsion de submersible (1) selon la revendication 6, le transmetteur de signal (10) qui a une fiabilité accrue comportant des moyens pour l'acquisition d'une valeur absolue de l'angle de rotation.

8. Moteur électrique de propulsion de submersible (1) selon au moins l'une des revendications 6 et 7, le transmetteur de signal (10) qui a une fiabilité accrue étant conçu comme un capteur magnétique de position.

9. Moteur électrique de propulsion de submersible (1) selon la revendication 6, ayant un agencement du transmetteur de signal (10) qui a une fiabilité accrue dans un espace (9) entouré par un carter (18) du moteur de propulsion (1).

10. Moteur électrique de propulsion de submersible (1) selon au moins l'une des revendications 1 à 9, ayant une résolution accrue, correspondant aux exigences d'une régulation de haute précision du moteur de propulsion (1), de l'angle de rotation de la roue polaire (4) pour au moins l'un des transmetteurs de signal (10, 11, 12 ou 12').

11. Moteur électrique de propulsion de submersible (1) selon la revendication 10, le ou les transmetteurs de signal (10, 11, 12 ou 12') qui ont une résolution accrue de l'angle de rotation étant conçus comme des transmetteurs incrémentiels magnétiques ou optiques.

12. Moteur électrique de propulsion de submersible (1) selon au moins l'une des revendications 1 à 9, au moins l'un des transmetteurs de signal (10, 11, 12 ou 12') produisant un signal de sortie analogique.

13. Moteur électrique de propulsion de submersible (1) selon la revendication 12, au moins l'un des transmetteurs de signal (10, 11, 12 ou 12') avec signal de sortie analogique étant conçu comme un transmetteur tachymétrique ou comme un résolveur à 2 ou 3 phases.

14. Moteur électrique de propulsion de submersible (1) selon au moins l'une des revendications 1 à 13, au moins l'un des transmetteurs de signal (11, 12) qui a une résolution accrue de l'angle de rotation et/ou qui a un signal de sortie analogique étant placé, dans la zone du moteur (1) qui n'est pas située côté sortie, dans la zone de surface frontale (23b).

15. Moteur électrique de propulsion de submersible (1) selon l'une des revendications précédentes, ayant une conception du moteur de propulsion (1) comme machine synchrone avec roue polaire à aimant permanent (4).
